(19) Europäisches Patentamt
European Patent Office
Office européen des brevets

(11) **EP 4 472 327 A1**

(12) **EUROPEAN PATENT APPLICATION**
published in accordance with Art. 153(4) EPC

(43) Date of publication:
**04.12.2024 Bulletin 2024/49**

(21) Application number: **23746173.6**

(22) Date of filing: **18.01.2023**

(51) International Patent Classification (IPC):
*H04W 74/08* (2024.01)

(52) Cooperative Patent Classification (CPC):
**H04L 5/00; H04L 47/22; H04W 74/08**

(86) International application number:
**PCT/CN2023/072833**

(87) International publication number:
**WO 2023/143292 (03.08.2023 Gazette 2023/31)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **27.01.2022 CN 202210101187**

(71) Applicant: **Beijing Unisoc Communications Technology Co., Ltd**
**Beijing 100083 (CN)**

(72) Inventor: **ZHOU, Huan**
**Beijing 100083 (CN)**

(74) Representative: **advotec.**
**Patent- und Rechtsanwaltspartnerschaft Tappe mbB**
**Widenmayerstraße 4**
**80538 München (DE)**

(54) **RANDOM ACCESS METHOD, DEVICE, AND STORAGE MEDIUM**

(57) Embodiments of the present disclosure provide a random access (RA) method, an RA device, and a storage medium. The RA method is applied to a terminal device, and includes: sending a first preamble at a first random access channel occasion (RO), and sending a second preamble at a second RO; and receiving a random access response (RAR) in a RAR window, where a start position of the RAR window is determined based on the first RO or the second RO. If the terminal device sends a preamble at a plurality of ROs when initiating RA, the RA method provided in the present disclosure can determine a start position of receiving the RAR by the terminal device, prevent the terminal device from failing to receive the RAR because the terminal device cannot determine the start position of the RAR window, and improve an RA success rate of the terminal device. This further improves an uplink coverage capability of a communication system, alleviates an uplink-downlink imbalance of the communication system, and improves user experience.

FIG. 1

**Description**

**CROSS-REFERENCE TO RELATED APPLICATIONS**

The present disclosure claims priority to Chinese Patent Application No. 202210101187.9, filed with the China National Intellectual Property Administration (CNIPA) on January 27, 2022 and entitled "RANDOM ACCESS METHOD, DEVICE, AND STORAGE MEDIUM", which is incorporated herein by reference in its entirety.

**TECHNICAL FIELD**

Embodiments of the present disclosure relate to the technical field of communications, and in particular, to a random access (RA) method, an RA device, and a storage medium.

**BACKGROUND**

In a mobile communication system, a user terminal device is small size with a limited battery capacity. In order to achieve a good endurance capacity, the terminal device has relatively small transmit power. On the contrary, in order to ensure the quality of downlink transmission, transmit power of the network device in the mobile communication system is much greater than the transmit power of the terminal device. This causes an uplink-downlink imbalance in the mobile communication system.

The 5th generation mobile communication technology (5G) introduces sub-6 GHz, millimeter wave (mmWave), and other high-frequency new frequency bands, more flexible uplink and downlink timeslot allocation, and technologies such as massive multiple input multiple output (massive MIMO). This further exacerbates the uplink-downlink imbalance between the network device and the terminal device.

However, many target applications, such as video live streaming, will generate uplink traffic at a same magnitude as downlink traffic. These applications require a 5G network to have a continuous and high-quality uplink coverage capability. Therefore, uplink coverage is a bottleneck in coverage deployment of an existing 5G network.

**SUMMARY**

Embodiments of the present disclosure provide a random access (RA) method, an RA device, and a storage medium to improve an uplink coverage capability of a terminal device, alleviate an uplink-downlink imbalance between the terminal device and a network device, and improve user experience.

According to a first aspect, an embodiment of the present disclosure provides an RA method, applied to a terminal device and including:

sending a first preamble at a first random access channel occasion (RO), and sending a second preamble at a second RO; and
receiving a random access response (RAR) in a RAR window, where a start position of the RAR window is determined based on the first RO or the second RO.

In the above RA method provided in this embodiment of the present disclosure, the terminal device can determine the start position of the RAR window based on the first RO or the second RO, and further determine time of receiving the RAR. This prevents the terminal device from failing to receive the RAR, improves an RA success rate of the terminal device, thereby alleviating an uplink-downlink imbalance in a communication system, and improving user experience.

In a possible implementation, the first RO is located before the second RO.

In a possible implementation, the first RO is a start RO for initiating a random access procedure (RAP), and the second RO is a last RO for initiating the RAP.

In a possible implementation, the start position of the RAR window is determined based on the first RO, which includes:

determining the start position of the RAR window after an end position of the first RO.

In a possible implementation, the start position of the RAR window is separated from the end position of the first RO by at least one time unit.

In a possible implementation, the start position of the RAR window is determined based on the second RO, which includes:

determining the start position of the RAR window after an end position of the second RO.

In a possible implementation, the start position of the RAR window is separated from the end position of the second RO by at least one time unit.

In a possible implementation, the start position of the RAR window is determined based on a common search space (CSS) set, and the CSS set includes a type-1 common search space (Type1-CSS) corresponding to a downlink reference signal associated with each RO used to initiate a RAP.

In a possible implementation, the start position of the RAR window is a first monitoring position of the CSS set.

In a possible implementation, the start position of the RAR window is determined based on a first CSS, and the first CSS is a Type1-CSS corresponding to a downlink reference signal associated with the first RO.

In a possible implementation, the start position of the RAR window is a first monitoring position of the first CSS.

In a possible implementation, the start position of the RAR window is determined based on a second CSS, and the second CSS is a Type1-CSS corresponding to a downlink reference signal associated with the second RO.

In a possible implementation, the start position of the RAR window is a first monitoring position of the second CSS.

In a possible implementation, the RA method further includes:
determining a random access radio network temporary identifier (RA-RNTI) based on the first RO or the second RO.

In a possible implementation, after the receiving the RAR at the RAR window, the RA method further includes:
if a random access preamble identifier (RAPID) in the received RAR is the same as an identifier of the first preamble or the second preamble, stopping initiating RA.

According to a second aspect, an embodiment of the present disclosure further provides an RA method, applied to a network device, including:

receiving a first preamble at a first RO, and receiving a second preamble at a second RO; and
sending a RAR, where the RAR includes a RAPID, and the RAPID includes an identifier of the first preamble or the second preamble.

In the above RA method provided in this embodiment of the present disclosure, a physical downlink control channel (PDCCH) is scrambled and descrambled based on an RA-RNTI determined based on the first RO and the second RO. This can reduce complexity and time of descrambling the PDCCH by the terminal device.

In a possible implementation, the RAR is scrambled based on the first RO or the second RO.

In a possible implementation, the first RO is located before the second RO.

In a possible implementation, the first RO is a start RO for initiating a RAP, and the second RO is a last RO for initiating the RAP.

According to a third aspect, an embodiment of the present disclosure further provides a terminal device, including:

a first sending module configured to send a first preamble at a first RO, and send a second preamble at a second RO; and
a first receiving module configured to receive a RAR in a RAR window, where a start position of the RAR window is determined based on the first RO or the second RO.

It can be understood that the technical solution in the third aspect of the present disclosure is consistent with the technical solution in the first aspect of the present disclosure, and correspondingly, beneficial effects achieved by the possible implementations are similar, and are not described herein again.

In a possible implementation, the first RO is located before the second RO.

In a possible implementation, the first RO is a start RO for initiating a RAP, and the second RO is a last RO for initiating the RAP.

In a possible implementation, the first receiving module includes a first determining unit, and the first determining unit is configured to determine the start position of the RAR window after an end position of the first RO.

In a possible implementation, the start position of the RAR window is separated from the end position of the first RO by at least one time unit.

In a possible implementation, the first receiving module includes a second determining unit, and the second determining unit is configured to determine the start position of the RAR window after an end position of the second RO.

In a possible implementation, the start position of the RAR window is separated from the end position of the second RO by at least one time unit.

In a possible implementation, the start position of the RAR window is determined based on a CSS set, and the CSS set includes a Type1-CSS corresponding to a downlink reference signal associated with each RO used to initiate a RAP.

In a possible implementation, the start position of the RAR window is a first monitoring position of the CSS set.

In a possible implementation, the start position of the RAR window is determined based on a first CSS, and the first CSS is a Type1-CSS corresponding to a downlink reference signal associated with the first RO.

In a possible implementation, the start position of the RAR window is a first monitoring position of the first CSS.

In a possible implementation, the start position of the RAR window of is determined based on a second CSS, and the second CSS is a Type1-CSS corresponding to a downlink reference signal associated with the second RO.

In a possible implementation, the start position of the RAR window is a first monitoring position of the second CSS.

In a possible implementation, the terminal device further includes:

a determining module configured to determine an RA-RNTI based on the first RO or the second RO.

In a possible implementation, the terminal device further includes:

an interrupt module configured to: after the terminal device receives the RAR in the RAR window, if a RAPID in the received RAR is the same as an identifier of the first preamble or the second preamble, stop initiating RA.

According to a fourth aspect, an embodiment of the present disclosure further provides a network device, including:

a second receiving module configured to receive a first preamble at a first RO, and receive a second preamble at a second RO; and
a second sending module configured to send a RAR, where the RAR includes a RAPID, and the RAPID includes an identifier of the first preamble or the second preamble.

It can be understood that the technical solution in the fourth aspect of the present disclosure is consistent with the technical solution in the second aspect of the present disclosure, and correspondingly, beneficial effects achieved by the possible implementations are similar, and are not described herein again.

In a possible implementation, the RAR is scrambled based on the first RO or the second RO.

In a possible implementation, the first RO is located before the second RO.

In a possible implementation, the first RO is a start RO for initiating a RAP, and the second RO is a last RO for initiating the RAP.

According to a fifth aspect, an embodiment of the present disclosure provides a chip system, including: a communication interface configured to input and/or output information; and a processor configured to call a computer program to enable a device installed with the chip system to execute the RA method provided in the first aspect of the embodiments of the present disclosure, or to execute the RA method provided in the second aspect of the embodiments of the present disclosure.

According to a sixth aspect, an embodiment of the present disclosure provides an electronic device, including: at least one processor; and at least one memory communicatively connected to the processor. The memory stores a computer program executable by the processor, and the processor runs the computer program to execute the RA method provided in the first aspect of the embodiments of the present disclosure, or to execute the RA method provided in the second aspect of the embodiments of the present disclosure.

According to a seventh aspect, an embodiment of the present disclosure provides a computer-readable storage medium. The computer-readable storage medium stores a computer program, and the computer program is run by a computer to implement the RA method provided in the first aspect of the embodiments of the present disclosure, or to implement the RA method provided in the second aspect of the embodiments of the present disclosure.

It can be understood that the technical solutions in the fifth and sixth aspects in the embodiments of the present disclosure are consistent with the technical solution in the first or second aspect of the present disclosure. Beneficial effects achieved by various aspects and corresponding feasible implementations are similar, and are not described herein again.

**BRIEF DESCRIPTION OF THE DRAWINGS**

To describe the technical solutions of the embodiments of the present disclosure more clearly, the following briefly describes the accompanying drawings required in the embodiments. Apparently, the accompanying drawings in the following description show merely some embodiments of the present disclosure, and a person of ordinary skill in the art can still derive other accompanying drawings from these accompanying drawings without creative efforts.

FIG. 1 is a schematic diagram of an application scenario according to the present disclosure;
FIG. 2 is a schematic flowchart of a RAP according to an embodiment of the present disclosure;
FIG. 3 is a flowchart of an RA method according to an embodiment of the present disclosure;
FIG. 4 is a schematic diagram of interaction between a terminal device and a network device according to an embodiment of the present disclosure;
FIG. 5 is a schematic diagram of a mapping between a downlink reference signal and an RO according to an embodiment of the present disclosure;

FIG. 6 is a schematic flowchart of an RA method according to another embodiment of the present disclosure;

FIG. 7 is a schematic diagram of a start position of a RAR window according to an embodiment of the present disclosure;

FIG. 8 is a schematic diagram of a start position of another RAR window according to an embodiment of the present disclosure;

FIG. 9 is a schematic diagram of a start position of another RAR window according to an embodiment of the present disclosure;

FIG. 10 is a schematic diagram of a start position of another RAR window according to an embodiment of the present disclosure;

FIG. 11 is a schematic structural diagram of a terminal device according to an embodiment of the present disclosure;

FIG. 12 is a schematic structural diagram of a network device according to an embodiment of the present disclosure;

FIG. 13 is a schematic structural diagram of a terminal device according to another embodiment of the present disclosure; and

FIG. 14 is a schematic structural diagram of a network device according to another embodiment of the present disclosure.

## DETAILED DESCRIPTION

It should be understood that the technical solutions in the embodiments of the present disclosure can be applied to various communication systems, such as a mobile communication system based on long term evolution (LTE) in the 4th generation mobile communication technology (4G), and a mobile communication system based on new radio (NR) in the 5th generation mobile communication technology (5G).

The technical solutions provided in the present disclosure can also be applied to a communication system that integrates a plurality of communication technologies (such as a communication system that integrates an LTE technology and an NR technology), or to various new communication systems in the future, such as a 6G communication system and a 7G communication system. This is not limited in the embodiments of the present disclosure. The technical solutions in the embodiments of the present disclosure are also applicable to different network architectures, including but not limited to a relay network architecture, a dual-link architecture, a vehicle-to-everything communication architecture, and the like.

For a better understanding of the technical solutions of the present disclosure, the following describes in detail the embodiments of the present disclosure with reference to the accompanying drawings.

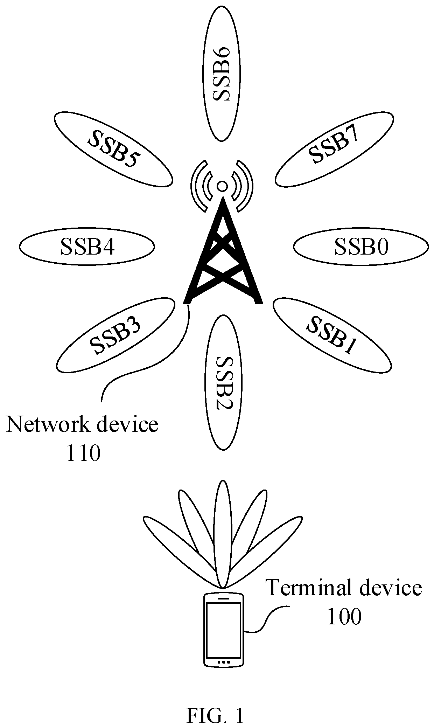

FIG. 1 is a schematic diagram of an application scenario according to the present disclosure. As shown in FIG. 1, the technical solutions provided in the embodiments of the present disclosure can be applied to a communication system including a terminal device 100 and a network device 110. The terminal device 100 can achieve RA with the network device 110 through the above 4G, 5G, and other technologies.

The terminal device 100 involved in the embodiments of the present disclosure can also be referred to as user equipment (UE). For example, the terminal device 100 may be a mobile phone, a pad, a desktop computer, a laptop, an all-in-one machine, a car-mounted terminal, a virtual reality (VR) terminal device, an augmented reality (AR) terminal device, a wireless terminal in industrial control, a wireless terminal in self driving, a wireless terminal in remote medical surgery, a wireless terminal in a smart grid, a wireless terminal in transportation safety, a wireless terminal in a smart city, a wireless terminals in a smart home, a cellular phone, a cordless phone, a Session Initiation Protocol (SIP) phone, a wireless local loop (WLL) station, a personal digital assistant (PDA), a handheld device with a wireless communication function, a computing device or another processing device connected to a wireless modem, a wearable device, a terminal device in a future mobile communication network, or a terminal device in a future evolved public land mobile network (PLMN). The terminal device 100 may also be a device with a transceiving function, such as a chip system. The chip system may include a chip, and may also include another discrete device. The terminal device 100 may also include a relay. Alternatively, each device capable of performing data communication with the network device 110 can be considered as the terminal device 100.

The network device 110 involved in the embodiments of the present disclosure may be a device that provides the wireless communication function for the terminal device 100, which is also referred to as a radio access network (RAN) device, an access network element, or the like. The network device 110 can support at least one wireless communication technology, such as the LTE technology and the NR technology. For example, the network device 110 may include but is not limited to: a next-generation base station (gNB) in the 5G, an evolved node B (eNB), a radio network controller (RNC), a node B (NB), a base station controller (BSC), a base transceiver station (BTS), a home base station (for example, a home evolved node B, or a home node B), a baseband unit (BBU), a transmitting and receiving point (TRP), a transmitting point (TP), a mobile switching center, and the like. The network device 110 may also be a wireless controller, a centralized unit (CU), and/or a distributed unit (DU) in a cloud radio access network (CRAN) scenario.

In some embodiments of the present disclosure, the network device 110 may also be a device that provides the wireless communication function for the terminal device 100, for example, a chip system. For example, the chip system may include a chip, and may also include another discrete device.

In some embodiments of the present disclosure, the network device 110 can also communicate with an Internet Protocol (IP) network, such as the Internet, a private IP network, or another data network.

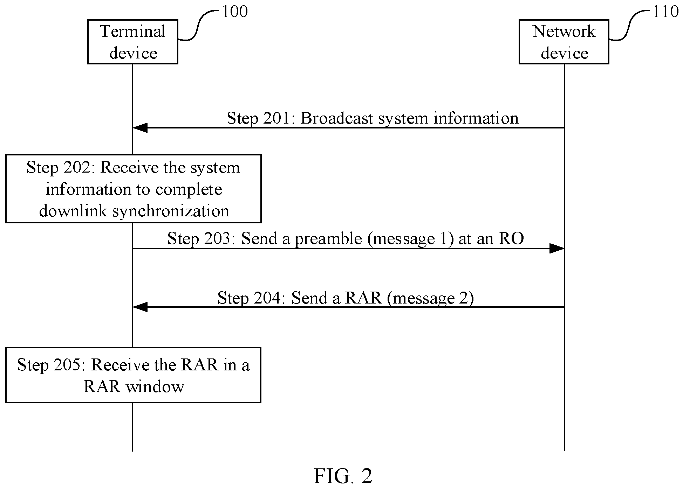

To facilitate an understanding of an improvement made to the solutions provided in the embodiments of the present disclosure, existing relevant technologies are first described briefly. Taking the application scenario shown in FIG. 1 as an example, a RAP in the existing relevant technologies is exemplarily described with reference to FIG. 2.

As shown in FIG. 2, a process of completing a RAP between a terminal device 100 and a network device 110 is as follows.

In step 201, the network device 110 broadcasts system information.

It should be understood that the network device 110 can broadcast the system information by sending a primary synchronization signal (PSS), a secondary synchronization signal (SSS), and a physical broadcast channel (PBCH). The system information includes at least system information and a time-frequency domain resource that are required for uplink and downlink synchronization between the terminal device 100 and the network device 110. For example, the system information may include a physical random access channel (PRACH) resource required by the terminal device 100 to initiate the RAP, and a resource for receiving a RAR.

For example, in a release-15 standard, in a 5G communication system, the PSS, the SSS, and the PBCH can be sent simultaneously in a manner that the PSS, the SSS, and the PBCH together form a synchronization signal and PBCH block (SSB).

As another example, in a 4G communication system, the PSS and the SSS can be transmitted separately from the PBCH. It can be understood that, because the PBCH is fixedly mapped onto a subcarrier around a center frequency, and the 4G communication system only has a bandwidth of 20M, after obtaining a center frequency of a cell, the terminal device 100 can quickly find the PBCH. In this case, the PSS and the SSS may not be transmitted with the PBCB at the same time.

It should be understood that, because the 5G communication system introduces sub-6GHz, millimeter-wave, and other high-frequency frequency bands, a coverage area of the network device 110 is reduced, and a high-frequency carrier has a greater transmission loss, it is necessary to use a beam forming-based transmission method to increase a coverage distance of a wireless signal. In addition, due to a limited coverage angle of each beam, the 5G communication system introduces a beam sweeping function. Therefore, a service scope of the entire cell is covered through beam sweeping.

The beam sweeping may mean that the network device 110 sends the SSB by using beams in different directions at different time. An example in which an index value of the SSB is 0 to 7 is used for description. As shown in FIG. 1, SSB 0 to SSB 7 can represent spatial beams in different directions. The network device 110 sends the SSB 0 to the SSB 7 at different time in a time division multiplexing (TDM) manner within one cycle.

It should be noted that different SSBs, such as the SSB 0 and the SSB 1, contain a same PSS and SSS except for different index values, and share a same PRACH resource.

In step 202, the terminal device 100 receives the system information and completes downlink synchronization.

It can be understood that the terminal device 100 can perform sweeping within a frequency band range of a communication system and receive the PSS, the SSS, and the PBCH that are broadcast by the network device 110. Taking the 5G communication system as an example, the terminal device 100 can receive at least one of the SSB 0 to the SSB 7 at different time. After receiving the SSB, the terminal device 100 can obtain a start position of a system frame and a physical cell identifier (PCI) based on the PSS and the SSS in the SSB. Then, the terminal device 100 can obtain a demodulation reference signal (DMRS) of the PBCH based on the index value of the SSB and the PCI, and demodulate the PBCH. The PBCH carries a master information block (MIB) generated by high-level signaling and additional information related to system timing, as shown in Table 1. Specifically, frequency range 1 (FR1) and frequency range 2 (FR2) are two main frequency bands used by the 5G communication system. The FR1 ranges from 450 MHz to 6 GHz, which is also known as the sub-6GHz frequency band. The FR2 ranges from 24.25 GHz to 52.6 GHz, which is also known as the millimeter-wave frequency band.

Table 1 Information carried on the PBCH

| Information | Quantity of bits | |
| --- | --- | --- |
| | FR1 | FR2 |
| System frame number (SFN) | 10 | 10 |
| Subcarrier spacing of system information block type 1 (SIB1) (parameter set) | 1 | 1 |
| Subcarrier spacing of the SSB | 5 | 4 |
| Time-domain position of a first DRMS of a physical downlink shared channel (PDSCH) | 1 | 1 |

(continued)

| Information | Quantity of bits | |
| --- | --- | --- |
| | FR1 | FR2 |
| Configuration of a physical downlink control channel (PDCCH) related to the SIB1 | 8 | 8 |
| Cell prohibition sign | 1 | 1 |
| Intra-frequency cell reselection sign | 1 | 1 |
| SSB index | 0 | 3 |
| Half-frame indication | 1 | 1 |
| Choice (indicating whether an extended MIB is currently available) | 1 | 1 |
| Reserved bit | 3 | 1 |
| Cyclic redundancy check (CRC) | 24 | 24 |

It should be understood that the MIB includes initial configuration information used by the terminal device 100 to access a network, such as an SFN, bandwidth information, and an antenna configuration. However, the information carried by the MIB is limited and not enough to allow the terminal device 100 to reside in the cell and further initiate initial access. The terminal device 100 still requires remaining minimum system information (RMSI). The terminal device 100 can achieve fast synchronization and network access by receiving the RMSI.

For example, the RMSI may include a plurality of system information blocks (SIBs), such as the SIB1, system information block type 2 (SIB2), and system information block type 3 (SIB3).

It should be noted that in the 5G communication system, the SIB is sent through the PDSCH, and the PDSCH needs to be scheduled based on downlink control information (DCI) of a PDCCH. Therefore, the terminal device 100 needs to obtain configuration information of a PDCCH related to the SIB in the MIB, perform blind detection on the PDCCH, obtain the DCI, and decode the PDSCH based on the DCI to obtain the SIB.

It should be understood that the SIB may include the index value, a cycle, transmit power, an uplink common configuration, and other system scheduling information of the SSB. For example, the SIB may include a start position of a time-frequency domain, a length of a time domain, a resource block (RB) occupied by a frequency domain, and the like that are of a resource used by the terminal device 100 to initiate the RAP. After obtaining the SIB, the terminal device 100 can select an available PRACH resource to initiate RA.

In step 203, the terminal device 100 sends a preamble at an RO.

It should be understood that, after obtaining the available PRACH resource, the terminal device 100 needs to determine an occasion of sending the preamble on the PRACH resource, in other words, the RO.

The RO may be an occasion of sending the preamble by the terminal device 100, which may include a time-domain occasion and/or a frequency-domain occasion. For example, the RO may be the time-domain occasion of sending the preamble by the terminal device 100, may be the frequency-domain occasion of sending the preamble, or may be the time-domain occasion and the frequency-domain occasion of sending the preamble by the terminal device 100.

For example, the time-domain occasion of sending the preamble by the terminal device 100 may be a time-domain position of the PRACH resource when the terminal device 100 sends the preamble. The frequency-domain occasion of sending the preamble by the terminal device 100 may be the frequency-domain position of the PRACH resource when the terminal device 100 sends the preamble.

As described above, because the SSB 0 to SSB 7 are broadcast through the beam sweeping in the 5G communication system, SSBs with different index values correspond to beams in different directions. Due to a random spatial position of the terminal device 100, the terminal device 100 cannot modulate its own transmitted beam based on a received beam. As a result, after receiving SSBs in different directions, the terminal device 100 still sends the preamble in an omnidirectional manner, such that the network device 110 can receive, in all beam directions, the preamble sent by the terminal device 100. As a result, the network device 110 cannot determine a direction of a beam pointing to the terminal device 100. Therefore, the 5G communication system uses a method of associating the RO and the SSB. In this way, after receiving the preamble, the network device 110 can determine the index value of the SSB based on the time-domain and frequency-domain positions of sending the preamble, and thus determine the direction of the beam pointing to the terminal device 100.

It should be understood that the SSBs with different index values share a same PRACH resource. Therefore, in order to enable the network device 110 to distinguish the SSBs with different index values based on the occasion of sending the preamble by the terminal device 100, the PRACH resource can be divided such that the SSBs with different index values correspond to different ROs, in other words, there is a mapping relationship between the SSB and the RO.

For example, the PRACH resource can be divided into N×M ROs. The PRACH resource is divided into N groups in the frequency domain and into M groups in the time domain, thereby obtaining the N×M ROs.

It can be understood that a quantity of ROs and a quantity of index values of the SSB can be mapped in a one-to-one manner. An example in which the SSB includes the SSB 0 to the SSB 7 is used. The RO may include RO 1 to RO 8. The RO 1 corresponds to the SSB 0, the RO2 corresponds to the SSB 1, the RO 3 corresponds to the SSB 2, ..., and the RO 8 corresponds to the SSB 7.

In addition, a plurality of ROs may alternatively be mapped onto one SSB. For example, one SSB can be mapped onto eight consecutive valid ROs. Moreover, one RO may alternatively be mapped onto a plurality of SSBs with different index values.

It should be understood that the terminal device 100 can select an RO of a corresponding SSB based on signal strength when the SSB is received. For example, an SSB with a synchronization signal reference signal receiving power (SS-RSRP) greater than a first threshold may be selected. The first threshold may be rsrp-ThresholdSSB. If there are a plurality of SSBs with the SS-RSRP greater than the first threshold, the terminal device 100 selects any one of the SSBs and sends the preamble on an RO associated with the SSB.

It should be noted that the terminal device 100 typically sends the preamble at an RO associated with one SSB. In this way, the network device 110 can determine the direction of the beam pointing to the terminal device 100.

In step 204, after receiving the preamble, the network device 110 sends the RAR.

It should be understood that after receiving the preamble, the network device 110 sends the RAR to the terminal device 100 that sends the preamble. The RAR includes a RAPID. The RAPID includes an identifier of a preamble. The identifier of the preamble in the RAPID is the same as an identifier of the preamble sent by the terminal device 100.

It should be noted that the RAR is transmitted through the PDSCH, and the PDSCH is scheduled based on the DCI of the PDCCH. The PDCCH can be scrambled based on an RA-RNTI. The RA-RNTI is determined based on the RO of sending the preamble by the terminal device 100.

In step 205, the terminal device 100 receives the RAR in a RAR window.

It should be noted that as described above, the terminal device 100 needs to monitor the PDCCH when receiving the RAR. Since information transmitted on the PDCCH may be broadcast information sent by the network device 110 or a RAR corresponding to another terminal device 100, the terminal device 100 needs to monitor PDCCHs corresponding to a same value of the RA-RNTI in the RAR window. A start position and a length of the RAR window can be transmitted to the terminal device 100 by using the SIB, and the value of the RA-RNTI is determined based on the RO of sending the preamble by the terminal device 100. Therefore, the terminal device 100 can determine the value of the RA-RNTI. If the terminal device 100 can decode the PDCCH based on the value of the RA-RNTI in the RAR window, the PDCCH is decoded to obtain the DCI to decode the PDSCH to obtain the RAPID of the RAR. If the RAPID is correct, the terminal device 100 successfully receives the RAR. If the terminal device 100 does not receive the PDCCH corresponding to the value of the RA-RNTI in the RAR window, or if the terminal device 100 receives a different RAPID in the RAR window, the RA of the terminal device 100 fails.

In the step 203, the terminal device 100 selects one RO to send one preamble. After that, in step 205, the RAR can be received based on a start position and a length of a RAR window that is configured based on the SSB and corresponds to the one RO. However, the terminal device 100 only sends the preamble once in one RAP, which increases an RA failure probability and weakens the uplink coverage capability of the 5G communication system. If the terminal device 100 sends the preamble at a plurality of ROs in the one RAP, in other words, sends the preamble for a plurality of times, an RA success probability increases. However, when the preamble is sent at the ROs, the terminal device 100 cannot determine an RO corresponding to a RAR window that is configured based on the SSB and used to receive the RAR, that is, the terminal device 100 cannot determine when to monitor the PDCCH that indicates the RAR.

In view of this, if the terminal device 100 separately sends the preamble at the ROs when initiating the RA, an RA method provided in the embodiments of the present disclosure can determine the start position of the RAR window used by the terminal device 100 to receive the RAR, prevent the terminal device 100 from unsuccessfully receiving the RAR because the terminal device 100 cannot determine the start position of the RAR window, and improve an RA success rate of the terminal device 100. This further improves an uplink coverage capability of a communication system, alleviate an uplink-downlink imbalance between the terminal device 100 and the network device 110, and improve user experience.

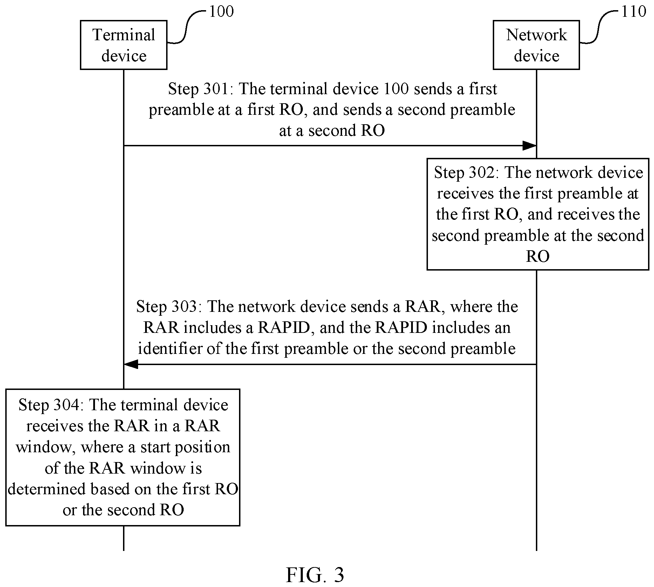

FIG. 3 is a flowchart of an RA method according to an embodiment of the present disclosure. As shown in FIG. 3, the RA method can be applied to the communication system shown in FIG. 1. The RA method includes following steps.

In step 301, a terminal device 100 sends a first preamble at a first RO, and sends a second preamble at a second RO.

Optionally, the first RO and the second RO are different in a time domain. For example, the first RO is earlier or later than the second RO in terms of time.

It can be understood that the terminal device 100 can send a preamble for a plurality of times to initiate one RAP.

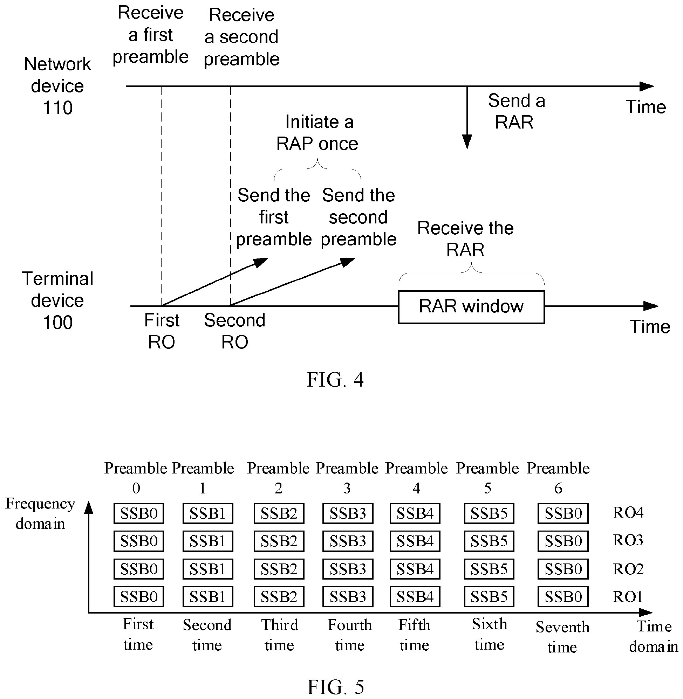

It should be noted that, that the terminal device 100 sends the first preamble at the first RO and sends the second preamble at the second RO may mean that the terminal device 100 sends the first preamble and the second preamble separately in a TDM mode. Description is provided by using an example in which the first RO is earlier than the second RO. As shown in FIG. 4, the terminal device 100 sends the second preamble at the second RO after sending the first preamble at the first RO.

It can be understood that this embodiment of the present disclosure does not limit a quantity of times that the terminal device 100 sends the preamble. For example, within an interval between the first RO and the second RO, the terminal device 100 may send the preamble once or for a plurality of times. For example, a third RO is later than the first RO and earlier than the second RO, and the terminal device 100 can send a third preamble at the third RO. For another example, a fourth RO is later than the third RO and earlier than the second RO, and the terminal device 100 can send a fourth preamble at the fourth RO.

In addition, after the second RO, the terminal device 100 can send the preamble once or for a plurality of times. For example, a fifth RO is later than the second RO, and the terminal device 100 can send a fifth preamble at the fifth RO. For another example, a sixth RO is later than the fifth RO, the terminal device 100 can send a sixth preamble at the sixth RO.

It can be understood that downlink reference signals associated with the first RO and the second RO may be the same or different. The downlink reference signal may be an SSB or a channel state information reference signal (CSI-RS). The CSI-RS is similar to the SSB. An index value of the CSI-RS corresponds to a beam. The CSI-RS can be associated with an RO, and there is a mapping relationship between the CSI-RS and the RO.

For example, SSBs associated with the first RO and the second RO may be the same or different. For example, SSB 0 may be associated with the first RO, and SSB 1 may be associated with the second RO. For another example, SSB 0 may be associated with both the first RO and the second RO.

CSI-RSs associated with the first RO and the second RO may be the same or different. Exemplary description is provided by using an example in which the CSI-RS includes CSI-RS 0 to CSI-RS 7. The CSI-RS 0 to the CSI-RS 7 can represent beams in different directions. The CSI-RS 0 may be associated with the first RO, and the CSI-RS 1 may be associated with the second RO. For another example, the CSI-RS 0 may be associated with both the first RO and the second RO.

Optionally, the preamble may be composed of a cyclic prefix and a sequence.

For example, in a 5G communication system, the preamble supports four types of long sequence preambles with a length of 839 and nine types of short sequence preambles with a length of 139. A sequence length of the preamble can be indicated by high-level signaling prach-RootSequenceIndex, and the high-level signaling can be indicated by a SIB.

It should be noted that there are a total of 64 available preamble sequences in each cell. The terminal device 100 can choose to send one of the preamble sequences on the RO. The terminal device 100 can obtain, based on RACH-ConfigCommon carried by BWP-Common in SIB1, a parameter configuration for initiating a RAP. For example, the terminal device 100 can obtain a manner of associating the SSB and the RO, such as one-to-one mapping, or a manner of mapping a plurality of SSBs mapping onto one RO. The parameter configuration of the RAP also includes a start value of an index value of an available preamble corresponding to the RO.

The CSI-RS is similar to the SSB. The following uses the SSB as an example for exemplary description. Description is provided by using an example in which there are six SSBs, namely the SSB 0 to the SSBS, one SSB is mapped onto four ROs, and four ROs are included in a frequency domain. As shown in FIG. 5, in a same time period (time domain), there are a total of four ROs in the frequency domain, namely RO 1, RO 2, RO 3, and RO 4. An example in which an RO corresponding to first time is the first RO and an RO corresponding to second time is the second RO. There are a total of four occasions at the first time, namely a first RO 1, a first RO 2, a first RO 3, and a first RO 4. There are also four occasions at the second time, namely a second RO 1, a second RO 2, a second RO 3, and a second RO 4.

As shown in FIG. 5, each SSB can be mapped onto the RO 1, the RO 2, the RO 3, and the RO 4. For example, if the first RO is associated with the SSB 0 at the first time, the SSB 0 can be associated with the first RO 1, the first RO 2, the first RO 3, and the first RO 4. For another example, if the RO is associated with the SSB 1 at the second time, the SSB 1 can be associated with the second RO 1, the second RO 2, the second RO 3, and the second RO 4.

Still referring to FIG. 5, within a same frequency range (frequency domain), as time increases, each RO is sequentially associated with the SSB 0 to the SSB 5 and cycled in an order of the SSB 0 to the SSB 5. Description is provided by using an example in which the first time corresponds to the first RO, the second time corresponds to the second RO, third time corresponds to the third RO, fourth time corresponds to the fourth RO, fifth time corresponds to the fifth RO, sixth time corresponds to the sixth RO, and seventh time corresponds to a seventh RO. The first RO is associated with the SSB 0, the second RO is associated with the SSB1, ..., and the sixth RO is associated with the SSB 5. After the sixth RO, the seventh RO is also associated with the SSB 0. Moreover, an index of the preamble is incremented from 0 and cycled in an order of index values 0 to 63 of the preamble. For example, an index value of a preamble corresponding to the SSB 0 in the first RO is 0, in other words, preamble 0, an index value of a preamble corresponding to the SSB1 in the second RO is 1, in other words, preamble 1, ..., and an index value of a preamble corresponding to the SSB 0 in the seventh RO is 6. After the index value of the preamble increases to 63, an index value of the SSB corresponding to the RO is 0, which starts to progressively increase as the RO progressively increases.

It should be noted that the above description is only exemplary. The downlink reference signal may be associated with the RO in a one-to-one manner, or a plurality of downlink reference signals may be associated with one RO.

It can be understood that the terminal device 100 can randomly select the index value of the preamble. The terminal device 100 can also select the index value of the preamble based on an indication of the network device 100. For example, the network device 110 can transmit the indication of selecting the index value of the preamble to the terminal device 100 by broadcasting system information.

Optionally, the first preamble may be the same as or different from the second preamble. For example, when the downlink reference signals associated with the first RO and the second RO are the same, the first preamble may be the same as or different from the second preamble. When the downlink reference signals associated with the first RO and second RO are different, the first preamble may be the same as or different from the second preamble.

Optionally, after sending the preamble, the terminal device 100 can determine a value of an RA-RNTI based on an RO of sending the preamble.

For example, a calculation formula for determining the value of the RA-RNTI is as follows:

$$RA\text{-}RNTI = 1 + s\_id + 14 \times t\_id + 14 \times 80 \times f\_id + 14 \times 80 \times 8 \times ul\_carrier\_id \qquad (1)$$

In the above calculation formula, $s\_id$ represents an index of a first orthogonal frequency division multiplexing (OFDM) symbol in the RO, and a value range of the $s\_id$ may be [0, 14). $t\_id$ represents an index of a first timeslot of the RO in a system frame, and a value range of the $t\_id$ may be [0, 80). $f\_id$ represents an index of the RO in the frequency domain, and a value range of the $f\_id$ may be [0, 8). $ul\_carrier\_id$ represents an uplink carrier used for transmitting the preamble. A value 1 represents a supplementary uplink (SUL) carrier, and a value 0 represents a non-SUL carrier.

In step 302, the network device 110 receives the first preamble at the first RO, and receives the second preamble at the second RO.

Optionally, after receiving the preamble, the network device 110 can determine the RA-RNTI based on an RO of receiving the preamble. For example, the value of the RA-RNTI is calculated according to the formula (1).

Optionally, the network device 100 can scramble, based on the calculated value of the RA-RNTI, a PDCCH indicating a PDSCH on which a RAR is located.

It should be noted that according to the formula (1), the value of the RA-RNTI is only related to the RO, and the terminal device 100 can determine the RO of sending its own preamble. Therefore, the terminal device 100 can calculate the value of the RA-RNTI based on the RO to descramble a PDCCH monitored in a RAR window. If the descrambling is not successful, the PDCCH monitored in the RAR window is not the corresponding RAR.

For example, if the network device 110 only receives the first preamble at the first RO, the network device 110 can determine the value of the RA-RANTI based on the first RO. If the network device 110 only receives the second preamble at the second RO, the network device 110 can determine the value of the RA-RNTI based on the second RO. If the network device 110 can receive the first preamble at the first RO and receive the second preamble at the second RO, the network device 110 can determine the value of the RA-RANTI based on the first RO or the second RO.

As another example, if the terminal device 100 sends the preamble at an occasion other than the first RO and the second RO, and the network device 110 receives the preamble at the occasion other than the first RO and the second RO, the network device 110 can determine the value of the RA-RNTI based on the occasion.

In step 303, the network device 110 sends the RAR. The RAR includes a RAPID, and the RAPID includes an identifier of the first preamble or the second preamble.

It can be understood that the identifier of the first preamble or the second preamble may be an index value of the first preamble or the second preamble. The identifier of the first preamble or the second preamble may alternatively be another symbol that can represent the first preamble or the second preamble.

For example, if the network device 110 only receives the first preamble at the first RO, the RAPID includes the identifier of the first preamble. If the network device 110 only receives the second preamble at the second RO, the RAPID includes the identifier of the second preamble. If the network device 110 can receive the first preamble at the first RO and receive the second preamble at the second RO, the RAPID may include the first preamble and/or the second preamble. That the RAPID may include the first preamble and/or the second preamble may mean that the RAPID includes only the first preamble, or the RAPID includes only the second preamble, or the RAPID may include both the first preamble and the second preamble.

As another example, if the network device 110 receives another preamble at the occasion other than the first RO and the second RO, the RAPID in the RAR may include an identifier of the another preamble.

As another example, if the network device 110 does not receive on the first RO,

It should be understood that, still referring to FIG. 4, the terminal device 100 can send the preamble at a plurality of ROs in the TDM mode. The network device 110 can receive at least one preamble, but only sends the RAR once.

In step 304, the terminal device 100 receives the RAR in the RAR window. A start position of the RAR window is determined based on the first RO or the second RO.

Optionally, the terminal device 100 can determine the start position of the RAR window based on the first RO or the second RO. For example, the terminal device 100 can start to determine the start position of the RAR window after the first RO or the second RO ends.

It can be understood that in the step 303, the network device 110 sends the RAR only once, and a relevant standard of the 5G communication system does not specify the start position of the RAR window when the terminal device 100 sends the preamble for a plurality of times in one RAP. Therefore, the terminal device 100 cannot determine start time of receiving the RAR. In the above RA method provided in this embodiment of the present disclosure, the terminal device 100 can determine the start position of the RAR window based on the first RO or the second RO, and further determine the start time of receiving the RAR. This prevents the terminal device 100 from failing to receive the RAR, improves an RA success rate of the terminal device 100.

Optionally, in the step 301, the first RO may be located before the second RO.

It can be understood that the first RO is earlier than the second RO in terms of time.

Optionally, the first RO is a start RO for initiating the RAP, and the second RO is a last RO for initiating the RAP.

It should be understood that, in this embodiment of the present disclosure, when initiating the RAP, the terminal device 100 first sends the first preamble at the first RO, and finally sends the second preamble at the second RO. The terminal device 100 can resend the preamble on an RO between the first RO and the second RO.

For example, the terminal device 100 sends four preambles in one RAP, and the downlink reference signal is the SSB. The step 301 is described with reference to the embodiment shown in FIG. 5. The terminal device 100 can sequentially send the first preamble at the first RO, the third preamble at the third RO, the fourth preamble at the fourth RO, and the second preamble at the second RO. The first RO, the second RO, the third RO, and the fourth RO can be associated with different SSBs. The first RO, the second RO, the third RO, and the fourth RO may have different frequency-domain positions, and the first preamble, the second RO, the third preamble, and the fourth RO may be different. For example, the first RO may correspond to the RO 1 at the first time, the first RO is associated with the SSB 0, and the first preamble is the preamble 0. The third RO may correspond to the RO 2 at the second time, the third RO is associated with the SSB 1, and the third preamble is the preamble 1. The fourth RO may correspond to the RO 3 at the third time, the fourth RO is associated with the SSB 2, and the fourth preamble is preamble 2. The second RO may correspond to the RO 4 at the fourth time, the second RO is associated with the SSB 3, and the second preamble is preamble 3.

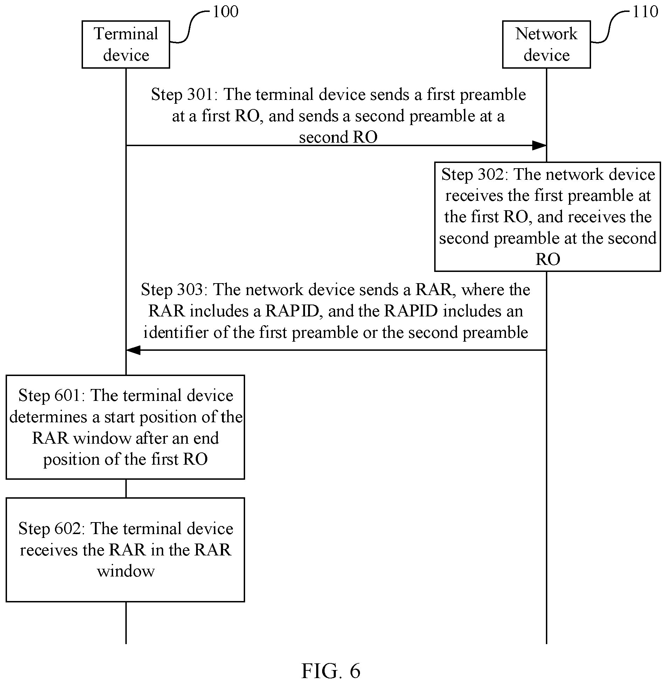

The following describes the step 304 in detail from a perspective that the terminal device 100 is an execution body. As shown in FIG. 6, the start position of the RAR window is determined based on the first RO in the step 304, which may include a following step:

In step 601, the terminal device 100 determines the start position of the RAR window after an end position of the first RO.

Optionally, after the terminal device 100 determines the start position of the RAR window after the end position of the first RO, the RA method may include a following step:

In step 602, the terminal device 100 receives the RAR in the RAR window.

It should be understood that the terminal device 100 needs to monitor the PDCCH in the RAR window to receive the RAR. However, the terminal device 100 needs to determine a time-domain or frequency-domain position of the PDCCH in order to decode the PDCCH. In the 5G communication system, due to an increase in a bandwidth of the 5G communication system, the PDCCH does not need to occupy all frequency bands. Therefore, the 5G communication system introduces a bandwidth part (BWP) to divide the bandwidth of the 5G communication system into a plurality of subsets. Each subset can use a different parameter set. Therefore, the 5G communication system can set a control resource set (CORESET) in each BWP to indicate a quantity of time-frequency symbols occupied by the PDCCH, and other information, and then set an emergence cycle of the PDCCH and a position of a sent OFDM symbol in a search space. When the CORESET is bound to the search space, the terminal device 100 can determine the time-domain and frequency-domain positions of the PDCCH.

For example, one search space can only be bound to one CORESET, while one CORESET can be bound to a plurality of search spaces.

It should be understood that, in the 5G communication system, the search space includes a CSS, and a Type1-CSS is used to receive the PDCCH of the RAR. The Type1-CSS can indicate a possible emergence cycle of the PDCCH related to the RAR, a timeslot continuously monitored in each cycle, a specific start symbol monitored in each timeslot, and the like. Further, the Type1-CSS can indicate a time-domain position of the CORESET. Therefore, the Type1-CSS can indicate the start position of the RAR window.

It should be noted that the type-1 CSS may correspond to a downlink reference signal associated with each RO used by the terminal device 100 to initiate the RAP. When completing downlink synchronization with the network device 100, the terminal device 100 can obtain a relevant configuration about the Type1-CSS based on the SIB1. For example, the type1-CSS can be provided by pdcch-ConfigCommon in the SIB1.

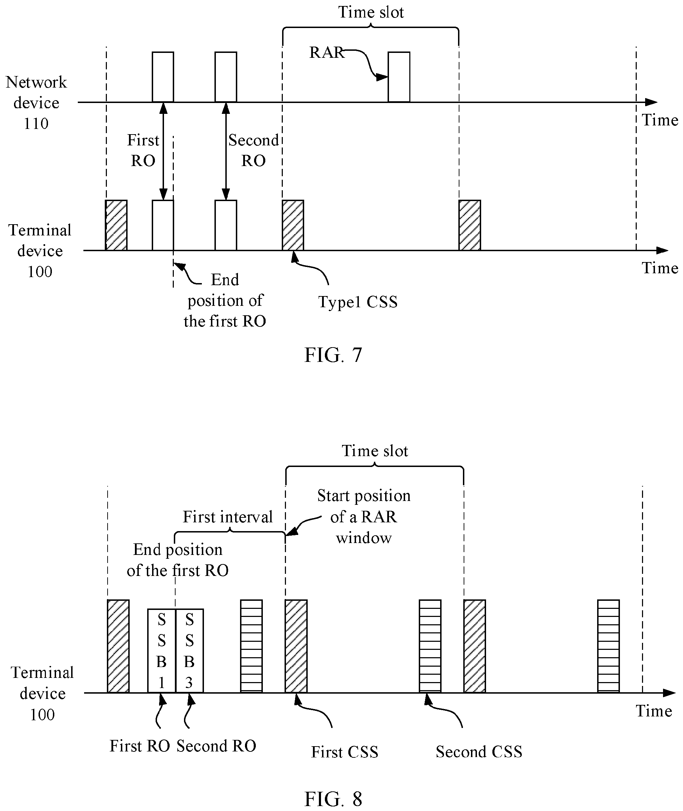

However, due to cyclicity of the Type1-CSS, when an end position of the Type1-CSS in a timeslot is earlier than a start position of the first RO, a monitoring position of the Type1-CSS in the timeslot is not the start position of the RAR window, as shown in FIG. 7.

In the RA method provided in this embodiment of the present disclosure, the terminal device 100 can determine the start position of the RAR window at the earliest after the first RO ends. This can ensure that the terminal device 100 receives the RAR.

Optionally, the start position of the RAR window may be the monitoring position of the Type1-CSS.

Optionally, the start position of the RAR window is separated from the end position of the first RO by at least one time unit.

Optionally, the time unit may be a symbol, a timeslot, a mini timeslot, a subframe, a wireless frame, or the like. This is not limited in this embodiment of the present disclosure.

Exemplary description is provided by using an example in which the time unit is the symbol. If the end position of the first RO is separated from the monitoring position of the Type1-CSS by less than one symbol, the monitoring position of the Type1-CSS is not the start position of the RAR window. It can be understood that, if the end position of the first RO is separated from the monitoring position of the Type1-CSS by at least one symbol, the monitoring position of the Type1-CSS may be the start position of the RAR window.

Optionally, the start position of the RAR window is determined based on the second RO in the step 304, which may include a following step:

In step 603, the terminal device 100 determines the start position of the RAR window after an end position of the second RO.

Optionally, after the terminal device 100 determines the start position of the RAR window after the end position of the second RO, the RA method may include a following step:

In the step 602, the terminal device 100 receives the RAR in the RAR window.

In the RA method provided in this embodiment of the present disclosure, the terminal device 100 can determine the start position of the RAR window for receiving the RAR after an end of the second RO, in other words, after an end of sending the preamble by the terminal device 100. This also can ensure that the terminal device 100 receives the RAR.

Optionally, the terminal device 100 determines the start position of the RAR window after the end position of the first RO, and the start position of the RAR window may be determined by the terminal device 100 based on a first CSS.

Optionally, the first CSS is a Type1-CSS corresponding to a downlink reference signal associated with the first RO.

Optionally, the terminal device 100 determines the start position of the RAR window after the end position of the second RO, and the start position of the RAR window may be determined by the terminal device 100 based on a second CSS.

Optionally, the second CSS is a Type1-CSS corresponding to a downlink reference signal associated with the second RO.

It should be understood that due to the cyclicity of the Type1-CSS and possible different time-domain positions of Type1-CSSs corresponding to different downlink reference signals, the corresponding Type1-CSS can be determined based on the downlink reference signal associated with the first RO or the second RO.

Optionally, the start position of the RAR window may be a first monitoring position of the first CSS.

Description is provided by using an example in which the downlink reference signal associated with the first RO is the SSB 1 and the downlink reference signal associated with the second RO is the SSB 3. As shown in FIG. 8, within each timeslot, a time-domain position of the first CSS corresponding to the first RO is earlier than a time-domain position of the second CSS corresponding to the second RO, and the start position of the RAR window is the first monitoring position of the first CSS. In addition, as shown in FIG. 8, a first interval between the end position of the first RO and the start position of the RAR window is greater than one symbol.

Optionally, the start position of the RAR window is a first monitoring position of the second CSS.

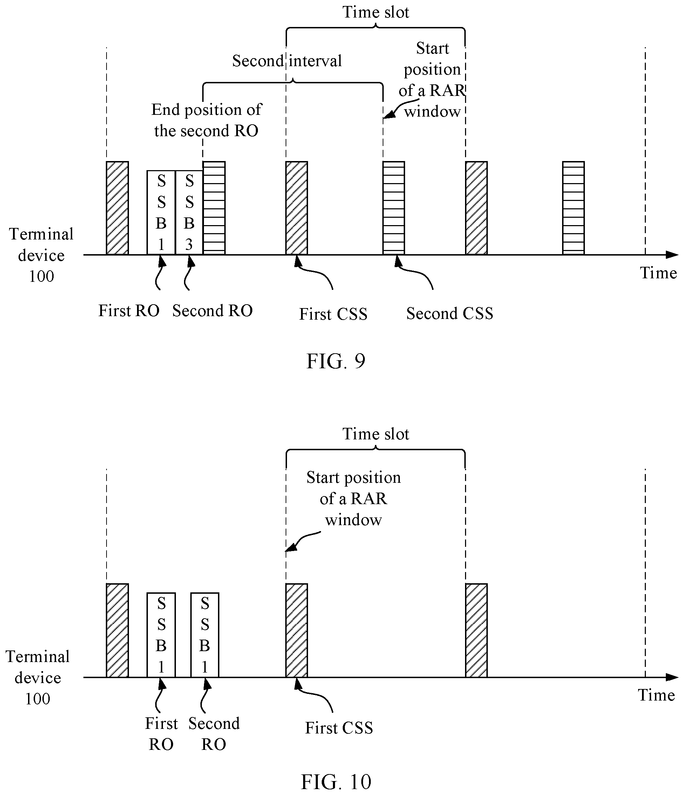

Description is provided by using an example in which the downlink reference signal associated with the first RO is the SSB 1 and the downlink reference signal associated with the second RO is the SSB 3. As shown in FIG. 9, within each timeslot, the time-domain position of the first CSS corresponding to the first RO is earlier than the time-domain position of the second CSS corresponding to the second RO. Because the second RO is adjacent to the second CSS in a timeslot of the second RO, a second search space in the timeslot does not correspond to the start position of the RAR window. A first monitoring position of the second search space in a next timeslot is the start position of the RAR window. In addition, as shown in FIG. 9, a second interval between the end position of the second RO and the start position of the RAR window is greater than one symbol.

It should be understood that the first RO and the second RO in this embodiment of the present disclosure may be associated with a same downlink reference signal. Description is provided by using an example in which the first RO and the second RO are associated with the SSB1 and with reference to FIG. 10. As shown in FIG. 10, since the first RO and the second RO are associated with the same SSB, the time-domain position of the first CSS is the same as the time-domain position of the second CSS. In this case, the end position of the second RO is separated from a start position of the first CSS by at least one symbol. Therefore, in this case, the start position that is of the RAR window and determined by the terminal

## EP 4 472 327 A1

device 100 based on the first RO is the same as the start position that is of the RAR window and determined by the terminal device 100 based on the second RO. On the contrary, if the end position of the second RO is separated from the start position of the first CSS by less than one symbol, the start position that is of the RAR window and determined by the terminal device 100 based on the second RO is the first CSS in the next timeslot.

It should be noted that, due to the cyclicity of the Type1-CSS, the start position of the first CSS corresponding to the first RO may be later than a start position of the second CSS corresponding to the second RO, and a start position of a Type1-CSS corresponding to the RO between the first RO and the second RO may be the earliest. Therefore, to prevent the terminal device 100 from failing to receive the RAR, the start position of the RAR window can be advanced.

Optionally, the terminal device 100 determines the start position of the RAR window after the end position of the first RO or the second RO, and the start position of the RAR window may be determined by the terminal device 100 based on a CSS set. The CSS set includes a Type1-CSS corresponding to the downlink reference signal associated with each RO used by the terminal device 100 to initiate the RAP.

Optionally, the start position of the RAR window is a first monitoring position of the CSS set.

Description is provided with reference to an embodiment shown in FIG. 9. The terminal device 100 initiates the RAP by using the first RO and the second RO. Therefore, the CSS set includes the first CSS and the second CSS. As shown in FIG. 9, the time-domain position of the first CSS is earlier than the time-domain position of the second CSS. Therefore, the first monitoring position of the CSS set is the first monitoring position of the first CSS.

Optionally, after the terminal device 100 receives the RAR in the RAR window in the step 602, the RA method may include a following step:

In the step 603, the terminal device 100 decodes the PDCCH in the RAR window.

It should be understood that the terminal device 100 requires the CORESET and the Type1-CSS to determine a position of the PDCCH. In order to prevent the terminal device 100 from obtaining more high-level parameters, longer DCI, and more types of RNTIs, the terminal device 100 can determine the time-domain and frequency-domain positions of the PDCCH based on CORESET 0 and the Type1-CSS during initial access. The terminal device 100 can determine the CORESET 0 based on the downlink reference signal. For example, the terminal device 100 can determine the CORESET 0 based on a MIB indicating an SSB with an aligned RB and an offset of a frequency-domain lower boundary of the CORESET 0.

In step 604, the terminal device 100 can descramble the PDCCH based on the RO of sending the preamble and the RA-RNTI determined according to the formula (1).

It should be understood that the terminal device 100 can descramble the PDCCH based on ROs used to send all preambles, but this increases complexity and time of the descrambling.

Optionally, the terminal device 100 can determine the RA-RATI based on the first RO or the second RO.

Optionally, the RAR sent by the network device 110 is scrambled by using the RA-RNTI determined based on the first RO or the second RO.

In the above RA method provided in this embodiment of the present disclosure, the PDCCH is scrambled and descrambled by using the RA-RNTI determined based on the first RO and the second RO. This can reduce the complexity and the time of descrambling the PDCCH by the terminal device 100.

In step 605, if the RAPID in the received RAR is the same as the identifier of the first preamble or second preamble, initiation of the RA is stopped.

It should be understood that the terminal device 100 can compare an identifier of each sent preamble with the RAPID in the RAR to determine whether the RAR corresponds to the sent preamble, but this increases verification time and complexity. The above RA method provided in this embodiment of the present disclosure can reduce the verification complexity and time only by comparing the first or second preamble with the RAPID.

The following describes the step 303 in detail from a perspective that the network device 110 is the execution body. The sending the RAR in the step 303 may include a following step:

In step 3031, the RAR can be scrambled by the network device 110 based on the first RO or the second RO.

For example, the network device 110 can determine the value of the RA-RNTI by using the formula (1) based on the first RO or the second RO, and then scramble a CRC check bit of the PDCCH based on the value of the RA-RNTI. The DCI of the PDCCH is used to indicate a position of the PDSCH transmitting RAR information.

It can be understood that the network device 110 can scramble, based on any RO of receiving the preamble, the PDCCH indicating the RAR, but the terminal device 100 requires more time to blindly descramble the PDCCH, increasing complexity and time of descrambling the PDCCH by the terminal device 100. In the above RA method provided in this embodiment of the present disclosure, the PDCCH is scrambled by using the RA-RNTI determined based on the first RO and the second RO. This can reduce the complexity and the time of descrambling the PDCCH by the terminal device 100.

The foregoing describes the specific embodiments of the present disclosure. Other embodiments fall within the scope of the appended claims. In some cases, the actions or steps described in the claims may be performed in sequences different from those in the embodiments and still achieve expected results. In addition, the processes depicted in the accompanying drawings do not necessarily require the specific orders or sequential orders shown for achieving the expected results. In some implementations, multitasking and parallel processing are also possible or may be advantageous.

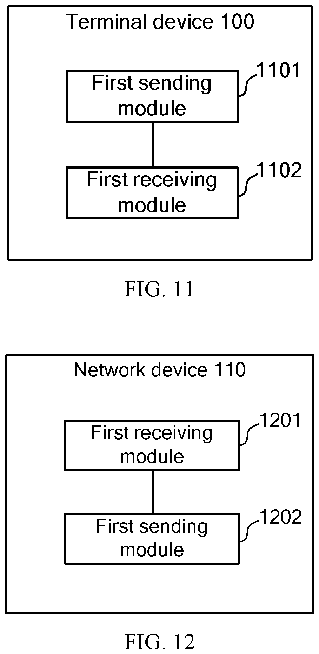

FIG. 11 is a schematic structural diagram of a terminal device 100 according to an embodiment of the present disclosure. As shown in FIG. 11, the terminal device 100 may include a first sending module 1101 and a first receiving module 1102.

The first sending module 1101 is configured to send a first preamble at a first RO, and send a second preamble at a second RO.

The first receiving module 1102 is configured to receive a RAR in a RAR window. A start position of the RAR window is determined based on the first RO or the second RO.

Optionally, the first RO is located before the second RO.

Optionally, the first RO is a start RO for initiating a RAP, and the second RO is a last RO for initiating the RAP.

Optionally, the first receiving module 1101 includes a first determining unit. The first determining unit is configured to determine the start position of the RAR window after an end position of the first RO.

Optionally, the start position of the RAR window is separated from the end position of the first RO by at least one time unit.

Optionally, the first receiving module 1102 includes a second determining unit. The second determining unit is configured to determine the start position of the RAR window after an end position of the second RO.

Optionally, the start position of the RAR window is separated from the end position of the second RO by at least one time unit.

Optionally, the start position of the RAR window is determined based on a CSS set. The CSS set includes a Type1-CSS corresponding to a downlink reference signal associated with each RO used to initiate the RAP.

Optionally, the start position of the RAR window is a first monitoring position of the CSS set.

Optionally, the start position of the RAR window is determined based on a first CSS. The first CSS is a Type1-CSS corresponding to a downlink reference signal associated with the first RO.

Optionally, the start position of the RAR window is a first monitoring position of the first CSS.

Optionally, the start position of the RAR window is determined based on a second CSS. The second CSS is a Type1-CSS corresponding to a downlink reference signal associated with the second RO.

Optionally, the start position of the RAR window is a first monitoring position of the second CSS.

Optionally, the terminal device 100 further includes:
a determining module configured to determine an RA-RNTI based on the first RO or the second RO.

Optionally, the terminal device 100 further includes:
an interrupt module configured to: after the terminal device 100 receives the RAR in the RAR window, if a RAPID in the received RAR is the same as an identifier of the first preamble or the second preamble, stop initiating RA.

The terminal device 100 provided in the embodiment shown in FIG. 11 can be configured to execute the technical solutions implemented by the terminal device 100 in the method embodiments shown in FIG. 3 to FIG. 10. For an implementation principle and a technical effect of the terminal device 100, reference may be further made to the related description of the method embodiments.

FIG. 12 is a schematic structural diagram of a network device 110 according to an embodiment of the present disclosure. As shown in FIG. 12, the terminal device 100 may include a second receiving module 1201 and a first sending module 1202.

The second receiving module 1201 is configured to receive a first preamble at a first RO, and receive a second preamble at a second RO.

The second sending module 1202 is configured to send a RAR. The RAR includes a RAPID, and the RAPID includes an identifier of the first preamble or the second preamble.

Optionally, the RAR is scrambled based on the first RO or the second RO.

Optionally, the first RO is located before the second RO.

Optionally, the first RO is a start RO for initiating a RAP, and the second RO is a last RO for initiating the RAP.

The network device 110 provided in the embodiment shown in FIG. 12 can be configured to execute the technical solutions implemented by the network device 110 in the method embodiments shown in FIG. 3 to FIG. 10. For an implementation principle and a technical effect of the network device 110, reference may be further made to the related description of the method embodiments.

The RA method provided in the embodiments of the present disclosure can be executed by a chip or a chip module. Various modules/units of various devices and products described in the above embodiments may be software modules/units, hardware modules/units, or partially software modules/units and partially hardware modules/units. For example, for various devices and products applied to or integrated into the chip, various modules/units included therein can be implemented by using hardware such as a circuit, or at least some modules/units can be implemented by using a software program that runs on an integrated processor inside the chip. Different modules/units may be located in a same component (such as a chip or a circuit module) or different components of the chip module, or at least some modules/units can be implemented by using a software program that runs on an integrated processor inside the chip module, and the remaining (if any) modules/units can be implemented by using hardware such as a circuit. For various devices and products applied to or integrated into a terminal, various modules/units included therein can be implemented by using hardware such as a circuit. Different modules/units may be located within a same component (such as a chip or a circuit module) or different components within the terminal, or at least some modules/units can be implemented by using a software program that runs on an integrated processor within the terminal, and the remaining (if any) modules/units can be implemented by using hardware such as a circuit.

The embodiments of the present disclosure further provide a chip system, including: a communication interface configured to input and/or output information; and a processor configured to call a computer program to enable a device installed with the chip system to execute the RA method provided in the embodiments shown in FIG. 3 to FIG. 10 of the present disclosure.

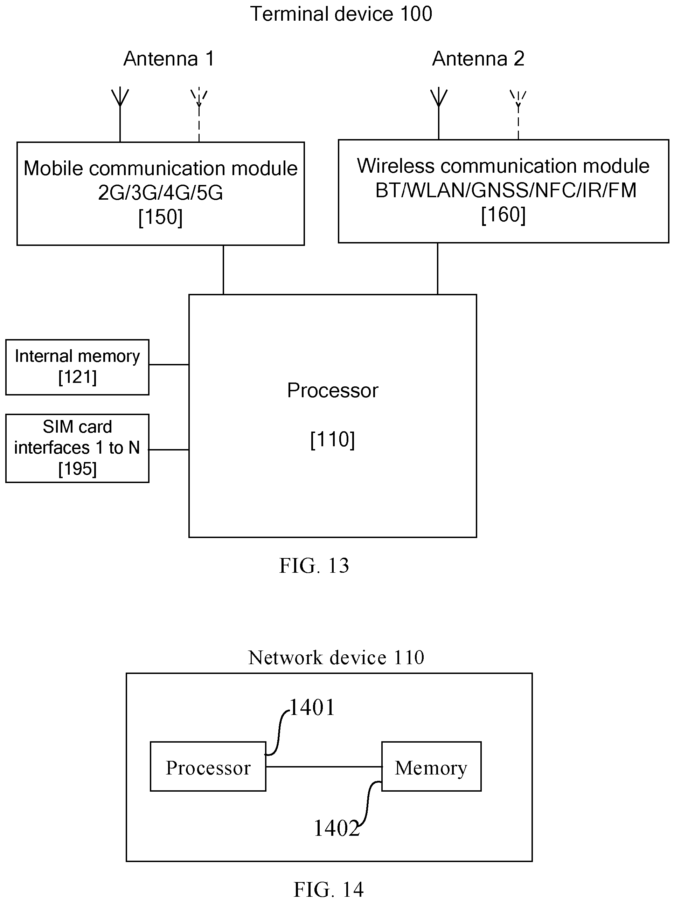

FIG. 13 is a schematic structural diagram of a terminal device 100 according to another embodiment of the present disclosure. As shown in FIG. 13, the above terminal device 100 may include at least one processor, and at least one memory communicatively connected to the processor. The memory stores a computer program executable by the processor, and the processor calls the computer program to execute the RA method provided in the embodiments shown in FIG. 3 to FIG. 10 of the present disclosure.

The above terminal device 100 may be an intelligent electronic device such as a smart phone or a tablet. A form of the above terminal device 100 is not limited in this embodiment.

For example, FIG. 13 schematically shows a structure of the terminal device 100 by taking the smart phone as an example. As shown in FIG. 13, the terminal device 100 may include a processor 110, an internal memory 121, an antenna 1, an antenna 2, a mobile communication module 150, a wireless communication module 160, and a subscriber identification module (SIM) card interface 195.

It can be understood that the structure illustrated in this embodiment of the present disclosure does not constitute a specific limitation on the terminal device 100. In some other embodiments of the present disclosure, the terminal device 100 may include more or fewer components than those shown in the figure, or some components may be combined, or some components may be split, or a different component arrangement may be used. The components illustrated in the figure may be implemented by hardware, software, or a combination of software and hardware.

The processor 110 may include at least one processing unit. For example, the processor 110 may include an application processor (AP), a modulation and demodulation processor, a graphics processing unit (GPU), an image signal processor (ISP), a controller, a video codec, a digital signal processor (DSP), a baseband processor, and/or a neural-network processing unit (NPU). Different processing units may be independent devices or may be integrated into one or more processors.

The controller can generate an operation control signal based on an instruction operation code and a timing signal to control instruction fetch and execution.

The processor 110 can also be equipped with a memory configured to store an instruction and data. In some embodiments, the memory in the processor 110 is a cache memory. The memory can store an instruction or data that has just been used or cyclically used by the processor 110. If the processor 110 needs to use the instruction or the data again, the instruction or the data can be directly called from the memory.

The processor 110 runs programs stored in the internal memory 121, to perform various functional applications and data processing, for example, to implement the method provided in the embodiments shown in FIG. 3 to FIG. 10 of the present disclosure.

In some embodiments, the processor 110 may include at least one interface. The interface may include an inter-integrated circuit (I2C) interface, an inter-integrated circuit sound (I2S) interface, a pulse code modulation (PCM) interface, a universal asynchronous receiver/transmitter (UART) interface, a mobile industry processor interface (MIPI), a general-purpose input/output (GPIO) interface, a subscriber identity module (SIM) interface, and/or a universal serial bus (USB) interface.

A wireless communication function of the terminal device 100 can be implemented through the antenna 1, the antenna 2, the mobile communication module 150, the wireless communication module 160, the modulation and demodulation processor, the baseband processor, and the like.

The antenna 1 and the antenna 2 are configured to transmit and receive an electromagnetic wave signal. Each antenna of the terminal device 100 can be configured to cover one or more communication frequency bands. Different antennas can also be reused to improve antenna utilization. For example, the antenna 1 can be reused as a diversity antenna of a wireless local area network (WLAN). In some other embodiments, the antenna can be used in conjunction with a tuning switch.

The mobile communication module 150 can provide 2G/3G/4G/5G and other wireless communication solutions applied to the terminal device 100. The mobile communication module 150 may include at least one filter, a switch, a power amplifier, a low noise amplifier (LNA), and the like. The mobile communication module 150 can receive an electromagnetic wave by using the antenna 1, perform filtering, amplification, and other processing on the received electromagnetic wave, and transmit a processed electromagnetic wave to the modulation and demodulation processor for demodulation. The mobile communication module 150 can also amplify a signal modulated by the modulation and demodulation processor, and convert the signal into an electromagnetic wave for radiation through the antenna 1. In some embodiments, at least some functional modules of the mobile communication module 150 may be disposed in the processor 110. In some embodiments, at least some functional modules of the mobile communication module 150 and at least some modules of the processor 110 may be integrated into a same device.

The modulation and demodulation processor may include a modulator and a demodulator. The modulator is configured to modulate a to-be-sent low-frequency baseband signal into a medium-high frequency signal. The demodulator is configured to demodulate the received electromagnetic wave signal into a low-frequency baseband signal. Subsequently, the demodulator transmits the demodulated low-frequency baseband signal to the baseband processor for processing. The low-frequency baseband signal is processed by the baseband processor and transmitted to the AP. In some embodiments, the modem processor may be an independent device. In some other embodiments, the modem processor may be independent of the processor 110, and disposed in a same device with the mobile communication module 150 or another functional module.

The wireless communication module 160 can provide wireless communication solutions applied to the terminal device 100, including a WLAN (such as a wireless fidelity (Wi-Fi) network), Bluetooth (BT), a global navigation satellite system (GNSS), frequency modulation (FM), near field communication (NFC), an infrared (IR) technology (IR), and the like. The wireless communication module 160 may be at least one device that is integrated into at least one communication processing module. The wireless communication module 160 receives an electromagnetic wave through the antenna 2, modulates and filters the electromagnetic wave signal, and sends a processed signal to the processor 110. The wireless communication module 160 can also receive a to-be-sent signal from the processor 110, modulates and amplify the to-be-sent signal, and converts a processed signal into an electromagnetic wave for radiation through the antenna 2.

In some embodiments, the antenna 1 of the terminal device 100 is coupled to the mobile communication module 150, and the antenna 2 is coupled to the wireless communication module 160. In this way, the terminal device 100 can communicate with a network and another device by using a wireless communication technology. The wireless communication technology may include a global system for mobile communications (GSM), a general packet radio service (GPRS), code division multiple access (CDMA), wideband code division multiple access (WCDMA), time-division code division multiple access (TD-SCDMA), LTE, the BT, the GNSS, the WLAN, NFC, FM, and/or the IR technology.

The NPU is a neural network (NN) computing processor that utilizes a structure of a biological neural network, such as a transmission pattern between neurons in a human brain, to quickly process input information, and performs self-learning continuously. Through the NPU, intelligent cognition and other applications of the terminal device 100 can be implemented, such as image recognition, facial recognition, speech recognition, and text understanding.

The internal memory 121 can be configured to store computer executable program code including an instruction. The internal memory 121 may include a program storage area and a data storage area. The program storage area can store an operating system, an application program required by at least one function, and the like. The data storage area can store data created during use of the terminal device 100, and the like. In addition, the internal memory 121 may include a high-speed random access memory (RAM), and may further include a nonvolatile memory, for example, at least one magnetic disk storage device, a flash storage device, or a universal flash storage (UFS). The processor 110 performs the various functional applications and the data processing of the terminal device 100 by running the instruction stored in the internal memory 121 and/or the instruction stored in the memory disposed in the processor.

The SIM card interface 195 is configured to connect a SIM card. The SIM card can be inserted into or removed from the SIM card interface 195 to achieve contact with or separation from the terminal device 100. The terminal device 100 can support one SIM card interface or N SIM card interfaces. N is a positive integer greater than 1. The SIM card interface 195 can support a nano SIM card, a micro SIM card, the SIM card, and the like. A plurality of cards can be simultaneously inserted into a same SIM card interface 195. The cards may be of a same type or different types. The SIM card interface 195 can also be compatible with different types of SIM cards. The SIM card interface 195 can also be compatible with an external storage card. The terminal device 100 interacts with a network through the SIM card to achieve functions such as calling and data communication. In some embodiments, the terminal device 100 adopts an embedded SIM (eSIM) card. The eSIM card can be embedded in the terminal device 100 and cannot be separated from the terminal device 100.

FIG. 14 is a schematic structural diagram of a network device 110 according to another embodiment of the present disclosure. As shown in FIG. 14, the network device 110 may include at least one processor 1401, and at least one memory communicatively connected to the processor. The memory stores a computer program executable by the processor, and the processor runs the computer program to execute the RA method provided in the embodiments shown in FIG. 2 to FIG. 10 of the present disclosure.

For example, FIG. 14 schematically shows a structure of the network device 110 by taking a gNB as an example. As shown in FIG. 14, the processor 1401 may include at least one processing unit. For example, the processor 1401 may include an AP, a modulation and demodulation processor, a GPU, an ISP, a controller, a memory, a video codec, a DSP, a baseband processor, and/or an NPU. Different processing units may be independent devices or may be integrated into one or more processors.

The memory 1402 can be configured to store computer executable program code including an instruction. The processor 1401 executes the RA method and steps shown in FIG. 3 to FIG. 10 of the present disclosure by running the instruction stored in the memory 1402. The memory 1402 may include a program storage area and a data storage area. The program storage area can store an operating system, an application program required by at least one function, and the like. The data storage area can store data created in a cache status registration process (such as a data volume and an identifier of a logical channel group). In addition, the memory 1402 may include a high-speed RAM, and may further include a nonvolatile memory, for example, at least one magnetic disk storage device, a flash storage device, or a UFS.

An embodiment of the present disclosure provides a computer-readable storage medium. The computer-readable storage medium stores a computer program. The computer program is executed by a computer to implement the RA method provided in the embodiments shown in FIG. 3 to FIG. 10 of the present disclosure.

The computer-readable storage medium can use any combination of one or more computer-readable media. The computer-readable media each may be a computer-readable signal medium or a computer-readable storage medium. More specific examples (non-exhaustive) of the computer-readable storage medium include an electrical connection with one or more conducting wires, a portable computer disk, a hard disk, a RAM, a read-only memory (ROM), an erasable programmable read-only memory (EPROM) or a flash memory, an optical fiber, a portable compact disc read-only memory (CD-ROM), an optical storage device, a magnetic storage device, or any suitable combination thereof. In the present disclosure, the computer-readable storage medium may be any tangible medium that contains or stores a program, and the program can be used by or in combination with an instruction execution system, apparatus, or device.

Computer program code for executing the operations in the specification may be compiled by using one or more programming languages or a combination thereof. The programming languages include object oriented programming languages, such as Java, Smalltalk, and C++, and conventional procedural programming languages, such as a "C" language or a similar programming language. The program code may be executed fully on a user computer, executed partially on a user computer, executed as an independent software package, executed partially on a user computer and partially on a remote computer, or executed fully on a remote computer or a server.

Moreover, the terms such as "first" and "second" are used only for the purpose of description and should not be construed as indicating or implying a relative importance, or implicitly indicating a quantity of indicated technical features. Thus, features limited by "first" and "second" may expressly or implicitly include at least one of that feature. In the description of the specification, "a plurality of" means at least two, for example, two or three, unless otherwise specifically limited.

What is described above is merely preferred embodiments of the specification, and is not intended to limit the specification. Any modifications, equivalent replacements, improvements, and the like made within the spirit and principle of the specification shall fall within the protection scope of the specification.

**Claims**

1. A random access, RA, method, applied to a terminal device and comprising:

   sending a first preamble at a first random access channel occasion, RO, and sending a second preamble at a second RO; and
   receiving a random access response, RAR, in a RAR window, wherein a start position of the RAR window is determined based on the first RO or the second RO.

2. The RA method according to claim 1, wherein the first RO is located before the second RO.

3. The RA method according to claim 2, wherein the first RO is a start RO for initiating a random access procedure, RAP, and the second RO is a last RO for initiating the RAP.

4. The RA method according to claim 2, wherein the start position of the RAR window is determined based on the first RO, which comprises:
   determining the start position of the RAR window after an end position of the first RO.

5. The RA method according to claim 4, wherein the start position of the RAR window is separated from the end position of the first RO by at least one time unit.

6. The RA method according to claim 2, wherein the start position of the RAR window is determined based on the second RO, which comprises:
determining the start position of the RAR window after an end position of the second RO.

7. The RA method according to claim 6, wherein the start position of the RAR window is separated from the end position of the second RO by at least one time unit.

8. The RA method according to any one of claims 4 to 7, wherein the start position of the RAR window is determined based on a common search space, CSS, set, and the CSS set comprises a type-1 common search space, Type1-CSS, corresponding to a downlink reference signal associated with each RO used to initiate the RAP.

9. The RA method according to claim 8, wherein the start position of the RAR window is a first monitoring position of the CSS set.

10. The RA method according to claim 4 or 5, wherein the start position of the RAR window is determined based on a first CSS, and the first CSS is a Type1-CSS corresponding to a downlink reference signal associated with the first RO.

11. The RA method according to claim 10, wherein the start position of the RAR window is a first monitoring position of the first CSS.

12. The RA method according to of claims 6 or 7, wherein the start position of the RAR window is determined based on a second CSS, and the second CSS is a Type1-CSS corresponding to a downlink reference signal associated with the second RO.

13. The RA method according to claim 12, wherein the start position of the RAR window is a first monitoring position of the second CSS.

14. The RA method according to any one of claims 1 to 7, further comprising:
determining a random access radio network temporary identifier, RA-RNTI, based on the first RO or the second RO.

15. The RA method according to any one of claims 1 to 7, wherein after receiving the RAR in the RAR window, the method further comprises:
in response to a determination that a random access preamble identifier, RAPID, in the received RAR is the same as an identifier of the first preamble or an identifier of the second preamble, stopping initiating RA.

16. A random access, RA, method, applied to a network device and comprising:

   receiving a first preamble at a first random access channel occasion, RO, and receiving a second preamble at a second RO; and
   sending a random access response, RAR, wherein the RAR comprises a random access preamble identifier, RAPID, and the RAPID comprises an identifier of the first preamble or an identifier of the second preamble.

17. The RA method according to claim 16, wherein the RAR is scrambled based on the first RO or the second RO.

18. The RA method according to claim 16 or 17, wherein the first RO is located before the second RO.

19. The RA method according to claim 18, wherein the first RO is a start RO for initiating a RAP, and the second RO is a last RO for initiating the RAP.

20. A terminal device, comprising:

   a first sending module configured to send a first preamble at a first random access channel occasion, RO, and send a second preamble at a second RO; and
   a first receiving module configured to receive a random access response, RAR, in a RAR window, wherein a start position of the RAR window is determined based on the first RO or the second RO.

21. The terminal device according to claim 20, wherein the first RO is located before the second RO.

22. The terminal device according to claim 21, wherein the first RO is a start RO for initiating a RAP, and the second RO is a last RO for initiating the RAP.

23. The terminal device according to claim 21, wherein the first receiving module comprises a first determining unit, and the first determining unit is configured to determine the start position of the RAR window after an end position of the first RO.

24. The terminal device according to claim 23, wherein the start position of the RAR window is separated from the end position of the first RO by at least one time unit.

25. The terminal device according to claim 21, wherein the first receiving module comprises a second determining unit, and the second determining unit is configured to determine the start position of the RAR window after an end position of the second RO.

26. The terminal device according to claim 25, wherein the start position of the RAR window is separated from the end position of the second RO by at least one time unit.

27. The terminal device according to any one of claims 23 to 26, wherein the start position of the RAR window is determined based on a common search space, CSS, set, and the CSS set comprises a Type1-CSS corresponding to a downlink reference signal associated with each RO used to initiate a random access procedure, RAP.

28. The terminal device according to claim 27, wherein the start position of the RAR window is a first monitoring position of the CSS set.

29. The terminal device according to claim 23 or 24, wherein the start position of the RAR window is determined based on a first CSS, and the first CSS is a Type1-CSS corresponding to a downlink reference signal associated with the first RO.

30. The terminal device according to claim 29, wherein the start position of the RAR window is a first monitoring position of the first CSS.

31. The terminal device according to of claims 25 or 26, wherein the start position of the RAR window is determined based on a second CSS, and the second CSS is a Typel-CSS corresponding to a downlink reference signal associated with the second RO.

32. The terminal device according to claim 31, wherein the start position of the RAR window is a first monitoring position of the second CSS.

33. The terminal device according to any one of claims 20 to 26, further comprising:
a determining module configured to determine a random access radio network temporary identifier, RA-RNTI, based on the first RO or the second RO.

34. The terminal device according to any one of claims 20 to 26, further comprising:
an interrupt module configured to: after the terminal device receives the RAR in the RAR window, in response to a determination that a random access preamble identifier, RAPID, in the received RAR is the same as an identifier of the first preamble or the second preamble, stop initiating RA.

35. A network device, comprising:

a second receiving module configured to receive a first preamble at a first random access channel occasion, RO, and receive a second preamble at a second RO; and
a second sending module configured to send a random access response, RAR, wherein the RAR comprises a random access preamble identifier, RAPID, and the RAPID comprises an identifier of the first preamble or an identifier of the second preamble.

36. The network device according to claim 35, wherein the RAR is scrambled based on the first RO or the second RO.

37. The network device according to claim 35 or 36, wherein the first RO is located before the second RO.

38. The network device according to claim 37, wherein the first RO is a start RO for initiating a random access procedure,

RAP, and the second RO is a last RO for initiating the RAP.

39. A chip system, comprising:

a communication interface configured to input and/or output information; and
a processor configured to run a computer program to enable a device installed with the chip system to execute the RA method according to any one of claims 1 to 15, or to execute the RA method according to any one of claims 16 to 19.

40. An electronic device, comprising:

at least one processor; and
at least one memory communicatively connected to the processor;
wherein the at least one memory stores a computer program executable by the at least one processor, and the at least one processor runs the computer program to implement the RA method according to any one of claims 1 to 15, or to implement the RA method according to any one of claims 16 to 19.

41. A computer-readable storage medium, wherein the computer-readable storage medium stores a computer program, and the computer program is run by a computer to implement the RA method according to any one of claims 1 to 15, or to implement the RA method according to any one of claims 16 to 19.

EP 4 472 327 A1

FIG. 1

21

100

Terminal
device

110

Network
device

Step 201: Broadcast system information

Step 202: Receive the system
information to complete
downlink synchronization

Step 203: Send a preamble (message 1) at an RO

Step 204: Send a RAR (message 2)

Step 205: Receive the RAR in a
RAR window

FIG. 2

```
┌──────────┐                                              ┌──────────┐
│ Terminal │ ⌐100                                     ⌐110 │ Network  │
│  device  │                                              │  device  │
└──────────┘                                              └──────────┘
     │                                                          │
     │   Step 301: The terminal device 100 sends a first        │
     │   preamble at a first RO, and sends a second preamble     │
     │              at a second RO                               │
     │─────────────────────────────────────────────────────────▶│
     │                                    ┌─────────────────────────────┐
     │                                    │ Step 302: The network device│
     │                                    │ receives the first preamble at│
     │                                    │ the first RO, and receives the│
     │                                    │ second preamble at the second │
     │                                    │             RO               │
     │                                    └─────────────────────────────┘
     │                                                          │
     │   Step 303: The network device sends a RAR, where the    │
     │   RAR includes a RAPID, and the RAPID includes an        │
     │   identifier of the first preamble or the second preamble│
     │◀─────────────────────────────────────────────────────────│
┌──────────────────────────┐                                    │
│ Step 304: The terminal device│                                │
│  receives the RAR in a RAR   │                                │
│ window, where a start position│                               │
│    of the RAR window is       │                               │
│ determined based on the first RO│                             │
│     or the second RO          │                               │
└──────────────────────────┘                                    │
     │                                                          │
```

FIG. 3

Receive
a first
preamble

Receive
a second
preamble

Network
device
110

Initiate a
RAP once

Send a
RAR

Time

Send the
first
preamble

Send the
second
preamble

Receive the
RAR

Terminal
device
100

RAR window

Time

First
RO

Second
RO

FIG. 4

Preamble 0 | Preamble 1 | Preamble 2 | Preamble 3 | Preamble 4 | Preamble 5 | Preamble 6

Frequency
domain

| SSB0 | SSB1 | SSB2 | SSB3 | SSB4 | SSB5 | SSB0 | RO4 |
| SSB0 | SSB1 | SSB2 | SSB3 | SSB4 | SSB5 | SSB0 | RO3 |
| SSB0 | SSB1 | SSB2 | SSB3 | SSB4 | SSB5 | SSB0 | RO2 |
| SSB0 | SSB1 | SSB2 | SSB3 | SSB4 | SSB5 | SSB0 | RO1 |

First
time

Second
time

Third
time

Fourth
time

Fifth
time

Sixth
time

Seventh
time

Time
domain

FIG. 5

Terminal device ⌐100

Network device ⌐110

Step 301: The terminal device sends a first preamble at a first RO, and sends a second preamble at a second RO

Step 302: The network device receives the first preamble at the first RO, and receives the second preamble at the second RO

Step 303: The network device sends a RAR, where the RAR includes a RAPID, and the RAPID includes an identifier of the first preamble or the second preamble

Step 601: The terminal device determines a start position of the RAR window after an end position of the first RO

Step 602: The terminal device receives the RAR in the RAR window

FIG. 6

Time slot

RAR

Network
device
110

Time

First
RO

Second
RO

Terminal
device
100

Time

End
position of
the first RO

Type1 CSS

FIG. 7

Time slot

First interval

Start position
of a RAR
window

End position
of the first RO

Terminal
device
100

| S S B 1 | S S B 3 |

Time

First RO Second RO

First CSS

Second CSS

FIG. 8

FIG. 9

FIG. 10

Terminal device 100

First sending
module 1101

First receiving
module 1102

FIG. 11

Network device 110

First receiving
module 1201

First sending
module 1202

FIG. 12

Terminal device 100

Antenna 1

Antenna 2

Mobile communication module
2G/3G/4G/5G
[150]

Wireless communication module
BT/WLAN/GNSS/NFC/IR/FM
[160]

Internal memory
[121]

SIM card
interfaces 1 to N
[195]

Processor

[110]

FIG. 13

Network device 110

1401

Processor

Memory

1402

FIG. 14

## INTERNATIONAL SEARCH REPORT

| | International application No. |
|---|---|
| | **PCT/CN2023/072833** |

**A.    CLASSIFICATION OF SUBJECT MATTER**

H04W 74/08(2009.01)i

According to International Patent Classification (IPC) or to both national classification and IPC

**B.    FIELDS SEARCHED**

Minimum documentation searched (classification system followed by classification symbols)

H04W

Documentation searched other than minimum documentation to the extent that such documents are included in the fields searched

Electronic data base consulted during the international search (name of data base and, where practicable, search terms used)

CNABS; CNTXT; VEN; WOTXT; EPTXT; USTXT; CNKI; 3GPP: 随机接入, 随机接入信道时机, 前导码, 索引, 随机接入响应窗, 随机接入前导码标识, random access, RA, PRACH occasion, RO, preamble, index, RAR window, RAPID

**C.    DOCUMENTS CONSIDERED TO BE RELEVANT**

| Category* | Citation of document, with indication, where appropriate, of the relevant passages | Relevant to claim No. |
|---|---|---|
| X | WO 2021227074 A1 (QUALCOMM INC. et al.) 18 November 2021 (2021-11-18) <br> description, paragraphs [0033]-[0175] | 1-41 |
| X | CN 110268795 A (BEIJING XIAOMI MOBILE SOFTWARE CO., LTD.) 20 September 2019 (2019-09-20) <br> description, paragraphs [0089]-[0196] | 1-41 |
| X | SAMSUNG. "Discussion on Multiple Msg.1 Transmission Procedure" <br> *3GPP TSG RAN WG1 #96bis, R1-1904414*, 29 March 2019 (2019-03-29), <br> section 2 | 1-41 |
| A | CN 109803445 A (HUAWEI TECHNOLOGIES CO., LTD.) 24 May 2019 (2019-05-24) <br> entire document | 1-41 |

☐ Further documents are listed in the continuation of Box C.    ☑ See patent family annex.

| | | |
|---|---|---|
| * | Special categories of cited documents: | "T" later document published after the international filing date or priority date and not in conflict with the application but cited to understand the principle or theory underlying the invention |
| "A" | document defining the general state of the art which is not considered to be of particular relevance | |
| "D" | document cited by the applicant in the international application | "X" document of particular relevance; the claimed invention cannot be considered novel or cannot be considered to involve an inventive step when the document is taken alone |
| "E" | earlier application or patent but published on or after the international filing date | |
| "L" | document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" | document referring to an oral disclosure, use, exhibition or other means | |
| "P" | document published prior to the international filing date but later than the priority date claimed | "&" document member of the same patent family |

| Date of the actual completion of the international search | Date of mailing of the international search report |
|---|---|
| **04 May 2023** | **16 May 2023** |

| Name and mailing address of the ISA/CN | Authorized officer |
|---|---|
| **China National Intellectual Property Administration (ISA/ CN)** <br> **China No. 6, Xitucheng Road, Jimenqiao, Haidian District, Beijing 100088** | |
| | Telephone No. |

Form PCT/ISA/210 (second sheet) (July 2022)

INTERNATIONAL SEARCH REPORT
Information on patent family members

International application No.

**PCT/CN2023/072833**

| Patent document cited in search report | | | Publication date (day/month/year) | Patent family member(s) | Publication date (day/month/year) |
|---|---|---|---|---|---|
| WO | 2021227074 | A1 | 18 November 2021 | None | |
| CN | 110268795 | A | 20 September 2019 | None | |
| CN | 109803445 | A | 24 May 2019 | None | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202210101187